# EUROPÄISCHE PATENTSCHRIFT

(11) **EP 2 721 602 B1**
(45) Veröffentlichungstag und Bekanntmachung des Hinweises auf die Patenterteilung: **06.03.2019**
(21) Anmeldenummer: 12728540.1
(22) Anmeldetag: 19.06.2012
(51) Int. Cl.: G10K 11/00, G01S 7/521, B60R 19/48

(54) **ULTRASCHALLSENSORVORRICHTUNG FÜR EIN FAHRZEUG SOWIE ANORDNUNG MIT EINER DERARTIGEN ULTRASCHALLSENSORVORRICHTUNG**
ULTRASONIC SENSOR DEVICE FOR A VEHICLE AND ARRANGEMENT COMPRISING SUCH AN ULTRASONIC SENSOR DEVICE
APPAREIL DE DÉTECTION À ULTRASONS POUR UN VÉHICULE ET DISPOSITIF COMPORTANT UN TEL APPAREIL DE DÉTECTION À ULTRASONS

(30) Priorität: 20.06.2011 DE 102011105051
(43) Veröffentlichungstag der Anmeldung: 23.04.2014
(73) Patentinhaber: Valeo Schalter und Sensoren GmbH, 74321 Bietigheim-Bissingen (DE); Volkswagen Aktiengesellschaft, 38440 Wolfsburg (DE)
(72) Erfinder: WEHLING,Hans-Wilhelm, 74074 Heilbronn (DE); JUNG, Thomas, 74074 Heilbronn (DE)
(74) Vertreter: Hofstetter, Schurack & Partner
(86) Internationale Anmeldenummer: PCT/EP2012/061664
(87) Internationale Veröffentlichungsnummer: WO 2012/175475

(56) Entgegenhaltungen:
- EP-A1- 1 588 903
- DE-A1- 10 237 721
- DE-A1- 10 347 098
- DE-A1- 19 758 075
- DE-A1-102005 046 173
- DE-A1-102006 008 718
- DE-A1-102006 022 925
- DE-A1-102006 044 656
- DE-A1-102010 010 327
- DE-A1-102011 105 017

## Beschreibung

Die Erfindung betrifft eine Ultraschallsensorvorrichtung für ein Fahrzeug mit zumindest einem Ultraschallsensor sowie eine Anordnung mit einer derartigen Ultraschallsensorvorrichtung.

Ultraschallsensoren sind in bekannter Weise im Frontbereich und im Heckbereich des Fahrzeugs, insbesondere an Stoßfängern, verbaut. Sie sind Fahrerassistenzeinrichtungen zugeordnet und liefern Informationen über die Fahrzeugumgebung. Fahrerassistenzeinrichtungen können beispielsweise Parkassistenzsysteme, Systeme zur Totwinkelüberwachung, Systeme zur Abstandshaltung, Spurüberwachungssysteme, Bremsassistenzsysteme etc. sein.

Bekannt ist es, dass derartige Ultraschallsensoren in Stoßfängern unverdeckt verbaut werden. Dies bedeutet, dass sie in Aussparungen in dem Stoßfänger angeordnet werden und außenseitig sichtbar sind. Bei derartig angeordneten Ultraschallsensoren wird die Senderichtcharakteristik horizontal und vertikal durch die Innengeometrie des Aluminiumtopfes des Ultraschallsensors erzeugt, wobei dieser Aluminiumtopf die Membran des Ultraschallsensors ist. Da bei den sichtbar verbauten Sensoren kein Hindernis die Schallausbreitung stört, ist die Funktion des Wandlers, Hindernisse beispielsweise beim Einparken des Fahrzeugs zu erkennen, gegeben.

Darüber hinaus sind verdeckt verbaute Wandler bzw. Ultraschallsensoren bekannt. Diese sind somit bei einer Betrachtung des Stoßfängers von außen nicht sichtbar und durch den Stoßfänger abgedeckt. Bei derartig verbauten Ultraschallsensoren direkt hinter dem Stoßfänger werden Ultraschallsignale durch den Stoßfänger hindurch angewendet. Dadurch ergibt sich immer eine symmetrische Schallkeule, sowohl horizontal wie auch vertikal. Wünschenswert ist es jedoch auch, asymmetrische Senderichtcharakteristiken erzeugen zu können. Derartig asymmetrische Senderichtcharakteristiken sind für vielerlei Anwendungen vorteilhaft. Es ist gerade für die Totwinkelerkennung wünschenswert, eine asymmetrische Senderichtcharakteristik erzeugen zu können. Für die Einparkassistenz ist es darüber hinaus wünschenswert, dass Ultraschallsensoren mit horizontal breiter und vertikal schmaler Senderichtcharakteristik ausgestattet sind.

Gerade bei verdeckt eingebauten Ultraschallsensoren sind wesentliche zusätzliche Anforderungen im Vergleich zu sichtbar verbauten Ultraschallsensoren gegeben. Insbesondere ist dabei die Position sehr genau einzuhalten und eine entsprechende Befestigung zu gewährleisten. Es ist ein Spalt zwischen dem Ultraschallsensor und dem Stoßfänger an der Klebestelle zu vermeiden.

Darüber hinaus ist es bei bekannten Befestigungskonstruktionen für verdeckt verbaute Ultraschallsensoren vorgesehen, diese dauerhaft und zerstörungsfrei nicht lösbar zu befestigen, wie dies in der DE 10 2006 044 656 A1 der Fall ist.

Aus der DE 10 2010 010 327 A1 ist ein Verfahren zur Befestigung eines Bauteils an ein Kunststoffteils eines Kraftfahrzeugs bekannt. Ein Ultraschallsensor ist dabei von einer Halterung umgeben, wobei nach vorne hin anschließend an die Halterung ein Entkopplungsring aufsitzt und angeordnet ist und sich über die Halterung in axialer Richtung betrachtet weiter nach vorne erstreckt als die Halterung und in dem Zusammenhang in eine Öffnung eines Stoßfängers eingreift.

Darüber hinaus ist aus der EP 1 588 903 A1 eine Haltevorrichtung für einen Sensor bekannt, der an einem Kraftfahrzeugbauteil verbaut wird.

Aus der DE 197 58 075 A1 ist eine Aufnahmehülse für einen Sensor bekannt, die an einem Stoßfänger eines Kraftfahrzeugs verbaut werden kann.

Aus der DE 10 2006 008 718 A1 ist ein Ultraschallsensormodul bekannt, bei welchem ein Ultraschallsensor in einem Halteteil verbaut wird, wobei dieses einen Schacht aufweist, in dem der Ultraschallsensor angeordnet ist. Lediglich ein Entkopplungsring ist in dieser Halterung angeordnet.

Aus der DE 102 37 721 A1 ist eine Sensoreinbauvorrichtung bekannt. Zum Stand der Technik ist dort erläutert, dass zur Entkopplung zwischen einer Sensoreinrichtung und einem Sensorgehäuse eine Dämpfungseinrichtung, insbesondere ein Silikon-Ring, angeordnet sein kann.

Es ist Aufgabe der vorliegenden Erfindung, eine Ultraschallsensorvorrichtung für ein Fahrzeug sowie eine Anordnung mit einer derartigen Ultraschallsensorvorrichtung zu schaffen, welche einen zuverlässigen Verbau eines Verkleidungsteils eines Fahrzeugs in verdeckter Weise ermöglicht und andererseits eine einfache Handhabung des Ultraschallsensors gewährleistet.

Diese Aufgabe wird durch eine Ultraschallsensorvorrichtung gemäß Patentanspruch 1 und eine Anordnung gemäß gemäß Patentanspruch 8 gelöst. Eine erfindungsgemäße Ultraschallsensorvorrichtung für ein Fahrzeug umfasst zumindest einen Ultraschallsensor. Die Ultraschallsensorvorrichtung umfasst darüber hinaus ein Halteteil mit zumindest einem Rastelement, wobei der Ultraschallsensor verrastend an dem Halteteil befestigbar ist.

Eine derartige Ausgestaltung mit einem separaten Halteteil ermöglicht einerseits eine zuverlässige und positionsgenaue Anbringung der Ultraschallsensorvorrichtung bei verdeckter Bauweise und gewährleistet darüber hinaus eine einfache und schnelle Handhabbarkeit des Ultraschallsensors. Durch die verrastende Anordnung wird ein einfaches und schnelles zerstörungsfreies Lösen und Wiederanbringen des Ultraschallsensors an dem Halteteil ermöglicht, ohne dass auch die gesamte Ultraschallsensorvorrichtung vom Verkleidungsteil entfernt werden müsste. Neben der einfachen Handhabung zur Montage können durch diese Ausgestaltung auch unterschiedlichste Konfigurationen der Ultraschallsensorvorrichtung erzielt werden. Eine Bestückung mit unterschiedlichen Ultraschallsensoren ist möglich, ohne dass die gesamte Vorrichtung vom Verkleidungsteil demontiert werden müsste. Durch das Halteteil wird somit quasi auch ein zusätzlicher Adapter gebildet, der für unterschiedlichste Vorrichtungskonfigurationen als Gleichteil verwendet werden kann.

Vorzugsweise ist vorgesehen, dass das Halteteil einstückig aus Kunststoff ausgebildet ist. Dadurch kann es sehr kostengünstig und gewichtsreduziert hergestellt werden.

Durch die einstückige Ausgestaltung ist auch eine sehr bauteilminimierte Ausgestaltung möglich.

Es ist das Halteteil mit einem rohrartigen bzw. bandartigen Aufnahmeschacht ausgebildet, in dem der Ultraschallsensor verrastbar ist. Der Ultraschallsensor wird somit möglichst umfänglich durch den Aufnahmeschacht umgeben und dadurch geschützt. Zusätzlich ist dadurch auch eine mechanische stabile Positionierung und eine sehr kompakte Ausgestaltung möglich.

Vorzugsweise ist vorgesehen, dass das Halteteil ein an den Aufnahmeschacht anschließendes flachzylinderförmiges Aufnahmeteil bzw. einen Untersatz aufweist, das bzw. der einen größeren Außendurchmesser aufweist als der Aufnahmeschacht. Die Anbindung des Aufnahmeteils an weitere Komponenten ist dadurch ebenfalls relativ großflächig und mechanisch stabil möglich.

Vorzugsweise ist vorgesehen, dass die Halterung bzw. das Halteteil nach hinten offen ausgebildet ist. Durch diese Ausgestaltung der nach hinten offenen Halterung kann die Einführung einerseits und die Entnahme andererseits des Ultraschallsensors in bzw. aus der Halterung besonders einfach und reversibel durchgeführt werden. Vorzugsweise ist der Ultraschallsensor zerstörungsfrei und reversibel lösbar in der Halterung angeordnet. Gerade bei der verdeckten Bauweise der Ultraschallsensorvorrichtung kann somit in einfacher Art und Weise der Ultraschallsensor zu Montagezwecken oder Wartungsarbeiten einfach entnommen nach hinten werden und wieder eingesetzt werden, ohne die gesamte Vorrichtung vom Verkleidungsteil entfernen zu müssen.

Indem das Einsetzen des Ultraschallsensors in die Halterung nur in ganz spezifischer Art und Weise ermöglicht ist, kann dadurch auch stets die richtige Einbauposition des Ultraschallsensors am Verkleidungsteil erzielt werden. Die Halterung ist nämlich stets an der gleichen Position ohnehin korrekt positioniert.

Erfindungsgemäß weist die Halterung den Aufnahmeschacht für den Ultraschallsensor auf. Dieser ist insbesondere rohrförmig ausgebildet. Durch diese Ausgestaltung kann quasi ein passgenaues Aufnehmen des Ultraschallsensors in dem Aufnahmeschacht erzielt werden, sodass radial zur Längsachse des Aufnahmeschachts und somit auch zur Längsachse des Ultraschallsensors kein Verschieben des Ultraschallsensors ermöglicht ist. Darüber hinaus ist der Ultraschallsensor mit seiner Bauhöhe entlang seiner Längsrichtung vollständig im Aufnahmeschacht versenkt angeordnet. Die bereits oben genannten Vorteile der minimalen Bauhöhe, des Schutzes und der positionssicheren Anbringung sind dadurch nochmals begünstigt.

Erfindungsgemäß ist vorgesehen, dass das Halteteil auf der dem Aufnahmeschacht abgewandten Vorderseite einen Aufnahmebereich bzw. Untersatz für einen Dämpfungsring zur Schwingungsdämpfung aufweist. Der Dämpfungsring kann beispielsweise aus Keramik ausgebildet sein. Er dient neben der Dämpfung der Schwingungsübertragung auf das Verkleidungsteil auch zur Begrenzung des Abstrahlbereichs des Ultraschallsensors.

Vorzugsweise ist der Aufnahmebereich entsprechend einer Nut ausgebildet, in der der Dämpfungsring positionsgenau angeordnet werden kann.

Es ist vorgesehen, dass der Dämpfungsring in dem Halteteil integriert ist, insbesondere von dem Kunststoffmaterial des Halteteils umspritzt ist. Unerwünschte Positionstoleranzen zwischen dem Dämpfungsring und dem Halteteil können dadurch vermieden werden.

Vorzugsweise ist vorgesehen, dass das Halteteil mit einem Befestigungsring, welcher zur Befestigung der Ultraschallsensorvorrichtung an einem Verkleidungsteil des Fahrzeugs ausgebildet ist, verbindbar, insbesondere verrastbar ist. Es wird somit zusätzlich zum Halteteil ein ganz spezifisch geformtes und ausgebildetes weiteres separates Bauteil bereitgestellt, welches dann die mechanisch stabile und dennoch leicht handhabbare Verbindung und Anbringung gewährleistet. Indem auch hier vorzugsweise wiederum eine Rastverbindung zwischen dem Halteteil und dem Befestigungsring vorgesehen ist, kann auch hier eine zerstörungsfrei reversibel trennbare und wieder zusammenfügbare Verbindung geschaffen werden. Die bereits oben genannten Vorteile zur Rastverbindung zwischen dem Halteteil und dem Ultraschallsensor gelten hier analog.

Es kann vorgesehen sein, dass in Abstrahlrichtung der Ultraschallsignale des Ultraschallsensors ein Senderichtelement angeordnet ist, mit dem die Senderichtcharakteristik in gewünschter Weise beeinflussbar ist. Es kann insbesondere vorgesehen sein, dass dieses Senderichtelement im Halteteil integriert ist. Auch hier kann somit eine sehr positionsgenaue Anordnung dauerhaft aufrecht erhalten werden. Nicht zuletzt ist auch die Anzahl von separaten Teilen minimiert.

Es ist zwischen dem Halteteil und dem Ultraschallsensor ein Entkopplungsring angeordnet. Dieser ist aus einem weichelastischen Material, wie beispielsweise Silikon ausgebildet.

Der Entkopplungsring ist benachbart zum Dämpfungsring angeordnet, und zwischen dem Ultraschallsensor bzw. der Membran des Ultraschallsensors und dem Dämpfungsring dazwischenliegend positioniert.

Des Weiteren betrifft die Erfindung eine Anordnung mit einer Ultraschallsensorvorrichtung gemäß der Erfindung oder einer vorteilhaften Ausgestaltung davon. Die Anordnung umfasst darüber hinaus ein Verkleidungsteil, insbesondere einen Stoßfänger, an dessen Innenseite die Ultraschallsensorvorrichtung verdeckt verbaut und befestigt ist. Dies bedeutet, dass der Stoßfänger die Ultraschallsensorvorrichtung frontseitig abdeckt und der Ultraschallsensor durch den Stoßfänger hindurch sendet und empfängt.

Vorzugsweise ist vorgesehen, dass der Befestigungsring der Ultraschallsensorvorrichtung integral im Verkleidungsteil ausgebildet ist. Es kann auch vorgesehen sein, dass der Befestigungsring ein separates Bauteil ist, welches an der Innenseite des Verkleidungsteils befestigt ist, insbesondere angeklebt ist.

Es kann auch vorgesehen sein, dass die Befestigung des als separates Bauteil ausgebildeten Befestigungsrings durch ein Schweißen oder ein Warmverstemmen erfolgt.

In vorteilhafter Weise wird somit im Hinblick auf das Montageverfahren ermöglicht, dass zunächst das Halteteil in den Befestigungsring eingerastet wird. Dies hat den Vorteil, dass der Rastring bzw. der Befestigungsring in der Serienfertigung ohne großen Aufwand an das Verkleidungsteil angebracht werden kann, ohne auf die Kleberaushärtung warten zu müssen. Die Anbringung des Befestigungsrings kann neben den bereits genannten Befestigungsmöglichkeiten auch durch ein doppelseitiges Klebeband oder durch anderweitige Anbringungsmöglichkeiten erfolgen.

In diesen angebrachten Befestigungsring kann dann der vorher mit einem flüssigen Klebstoff benetzte Rasthalter bzw. das Halteteil eingerastet werden. Dabei ist insbesondere auch bereits der Ultraschallsensor in das Halteteil eingerastet und befestigt.

Nach dem Verrasten des Halteteils mit dem Befestigungsring kann das gesamte Modul umfassend das Verkleidungsteil mit der daran befestigten Ultraschallsensorvorrichtung weiter montiert werden, ohne dass auf die Aushärtung des Klebstoffs, wie er in der Ultraschallsensorvorrichtung insbesondere am Halteteil angebracht wurde, warten zu müssen. Dieses Halteteil kann sich aufgrund der Verrastung mit dem Befestigungsring nicht mehr verschieben. Dadurch kann eine deutlich schnellere Montage erfolgen.

Durch die Verrastung zwischen dem Halteteil und dem Befestigungsring kann auch eine Verdrehsicherung zwischen den beiden Komponenten erreicht werden. Indem quasi der Befestigungsring und das Halteteil vorgesehen sind, ist auch stets die richtige Orientierung und Anordnung des Ultraschallsensors gewährleistet. Dies da nur in ganz spezifischen Positionen die Verrastung des Ultraschallsensors in dem Halteteil einerseits und des Halteteils in dem Befestigungsring andererseits ermöglicht ist.

Ein Ausführungsbeispiel der Erfindung wird nachfolgend anhand schematischer Zeichnungen näher erläutert. Es zeigen:
- Fig. 1: eine Explosionsdarstellung eines Ausführungsbeispiels einer erfindungsgemäßen Ultraschallsensorvorrichtung; und
- Fig. 2: eine perspektivische Darstellung eines Ausführungsbeispiels einer erfindungsgemäßen Anordnung.

In den Figuren werden gleiche oder funktionsgleiche Elemente mit den gleichen Bezugszeichen versehen.

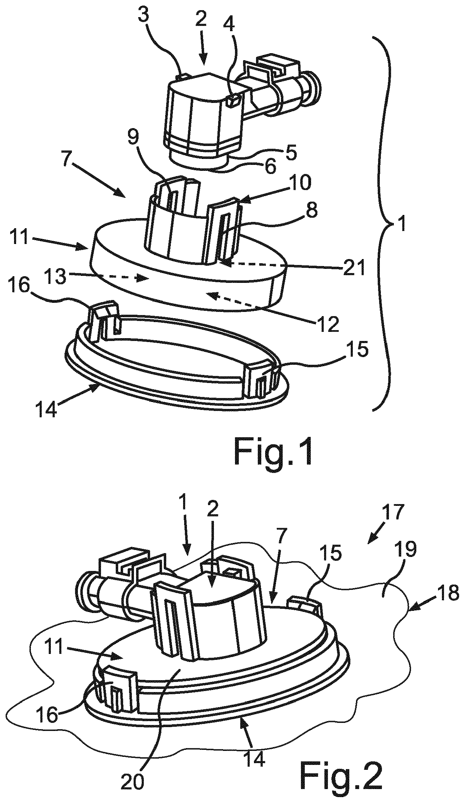

In Fig. 1 ist in einer Explosionsdarstellung eine Ultraschallsensorvorrichtung 1 gezeigt, welche zur Montage an einem Fahrzeug vorgesehen ist. Die Ultraschallsensorvorrichtung 1 kann einer Fahrerassistenzeinrichtung eines Fahrzeugs zugeordnet sein und Informationen über die Fahrzeugumgebung detektieren. Die Ultraschallsensorvorrichtung 1 umfasst einen Ultraschallsensor 2 der außenseitig zwei Rastelemente 3 und 4 aufweist. Eine Membran 5 des Ultraschallsensors 2 ist als Aluminiumtopf ausgebildet der ein Frontteil 6 mit einer ebenen Frontseite aufweist. Der Ultraschallsensor 2 ist zur Positionierung an einem Halteteil 7 vorgesehen, welches einstückig aus Kunststoff ausgebildet ist. Der Ultraschallsensor 2 kann dabei in dem Aufnahmeteil bzw. Halteteil 7 verrastet werden. Dazu greifen die beiden Rastelemente 3 und 4 in Rastlaschen 8 und 9 ein. Die Rastlaschen 8 und 9 sind in einem Aufnahmeschacht 10 des Halteteils 7 ausgebildet. Der Aufnahmeschacht 10 mündet nach unten hin in einen Untersatz bzw. ein flachzylinderförmiges Aufnahmeteil 11. Dieses weist einen größeren Außendurchmesser als der Aufnahmeschacht 10 auf, und ist wesentlich niedriger als der Aufnahmeschacht 10.

In dem Aufnahmeteil 11 ist in Fig. 1 nicht erkennbar integral ein Dämpfungsring angeordnet, der durch das Bezugszeichen 12 angedeutet ist. Der Dämpfungsring 12 ist zur Schwingungsdämpfung im Hinblick auf die Schwingungsübertragung auf das Verkleidungsteil des Fahrzeugs ausgebildet, und darüber hinaus auch zur Begrenzung der schwingenden Fläche des Ultraschallsensors 2 vorgesehen.

Der Dämpfungsring 12 ist insbesondere von dem Kunststoffmaterial des Halteteils 7 umspritzt. Der Dämpfungsring 12 ist insbesondere aus Keramik ausgebildet.

Darüber hinaus ist vorgesehen, dass in Abstrahlrichtung des Ultraschallsensors 2 vor dem Ultraschallsensor 2 ebenfalls integral in dem Halteteil 7 ein Senderichtelement ausgebildet ist. Dieses Senderichtelement dient zur Einstellung einer gewünschten Senderichtcharakteristik des Ultraschallsensors 2. Die Koppelflächen des Senderichtelements sind kleiner ausgebildet als die Fläche des Fontteils 6 der Membran 5. insbesondere können die Koppelflächen rechteckig oder oval ausgebildet sein. Dieses Senderichtelement kann beispielsweise aus Kunststoff sein und aus dem gleichen Material wie das Halteteil 7. Es kann jedoch auch vorgesehen sein, dass das Halteteil 7 und das Senderichtelement aus zwei verschiedenen Kunststoffen ausgebildet sind, und das einstückige Bauteil durch ein Zweikomponenten-Spritzverfahren hergestellt ist. Zwischen dem Halteteil 7 und dem Ultraschallsensor 2, insbesondere zwischen der Membran 5 und dem Dämpfungsring 12 ist erfindungsgemäß ein Entkopplungsring, welcher ebenfalls nicht gezeigt ist, und lediglich durch das Bezugszeichen 13 angedeutet ist, angeordnet, der aus einem weichelastischen Material, wie beispielsweise Silikon ausgebildet ist.

Die Ultraschallsensorvorrichtung 1 umfasst darüber hinaus als weiteres separates Bauteil einen Befestigungsring 14. Dieser ist ebenfalls einstückig aus Kunststoff ausgebildet und umfasst zwei Rastelemente 15 und 16. Diese sind zur Verrastung mit dem Halteteil 7 vorgesehen. Es ist somit auch das Halteteil 7 mit dem Befestigungsring 14 verrastend verbindbar.

In Fig. 2 ist in perspektivischer Darstellung ein Ausführungsbeispiel einer erfindungsgemäßen Anordnung 17 gezeigt. Die Anordnung 17 umfasst die Ultraschallsensorvorrichtung 1 und ein als Stoßfänger 18 ausgebildetes Verkleidungsteil.

An einer Innenseite 19 des Stoßfängers 18 ist die Ultraschallsensorvorrichtung 1 befestigt. Wie zu erkennen ist, ist dabei der Ultraschallsensor 2 in dem Aufnahmeschacht 10 angeordnet und entsprechend verrastet. Darüber hinaus ist auch das Halteteil 7 mit dem Befestigungsring 14 verrastet, der in etwa die Bauhöhe des Aufnahmeteils 11 aufweist und dieses Aufnahmeteil 11 umfangsseitig umgibt. Darüber hinaus ist in Fig. 2 zu erkennen, dass die Rastelemente 15 und 16 auf einer Oberseite 20 des Aufnahmeteils 11 des Halteteils 7 verrasten bzw. hinterschnappen.

Der Befestigungsring 14 ist durch Kleben oder Schweißen oder Warmverstemmen oder durch ein doppelseitiges Klebeband an der Innenseite 19 befestigt. Der Ultraschallsensor 2 und somit auch die Ultraschallsensorvorrichtung 1 ist verdeckt hinter dem Stoßfänger 18 verbaut. Der Stoßfänger 18 weist somit keinerlei Aussparung auf und verdeckt bei frontseitiger Betrachtung die Ultraschallsensorvorrichtung 1 vollständig.

Es kann bei einer alternativen Ausgestaltung vorgesehen sein, dass der Befestigungsring 14 einstückig und somit integral mit dem Stoßfänger 18 ausgebildet ist. Der Befestigungsring 14 ist insbesondere aus Kunststoff ausgebildet.

Im Hinblick auf das Fertigungsverfahren und die Montage ist zunächst vorgesehen, dass der Befestigungsring 14, wenn er als separates Bauteil ausgebildet ist, an der Innenseite 19 an entsprechender Position befestigt wird.

Im Weiteren wird dann das Halteteil 7 in den Befestigungsring 14 eingerastet. Es kann dabei vorgesehen sein, dass bereits der Ultraschallsensor 2 in dem Halteteil 7 verrastet ist, oder der Ultraschallsensor 2 erst nach dem Anbringen des Halteteils 7 an dem Befestigungsring 14 in das Halteteil 7 eingerastet wird. Insbesondere ist vorgesehen, dass die Außenseite des Frontteils 6 der Membran 5 mit Klebstoff benetzt wird, sodass die Membran 5 entsprechend verklebt ist.

Insbesondere ist vorgesehen, dass das Halteteil 7 an der Innenseite 19 angeklebt ist. Aufgrund des Befestigungsrings 14 ist es für die weitere Montage des Stoßfängers 18 mit der bereits daran befestigten Ultraschallsensorvorrichtung 1 nicht mehr erforderlich zu warten, bis dieser Klebstoff ausgehärtet ist, da das Halteteil 7 mit dem Ultraschallsensor 2 durch den Befestigungsring 14 bereits sicher in Position gehalten bleibt.

Vorzugsweise ist vorgesehen, dass das Koppelelement bzw. das Richtelement, welches in Fig. 1 durch das Bezugszeichen 21 angedeutet in der Darstellung jedoch nicht erkennbar ist, da es in dem Halteteil 7 integriert ist, mit seiner vorderen Koppelfläche insbesondere über eine Klebstoffschicht mit der Innenseite 19 verbunden, und mit der hinteren Koppelfläche mit der Außenseite des Frontteils 6 der Membran 5 verbunden, insbesondere verklebt ist.

## Patentansprüche

1. Ultraschallsensorvorrichtung (1) für ein Fahrzeug, mit einem Ultraschallsensor (2), einem Halteteil (7) und einem Entkopplungsring (13), wobei das Halteteil (7) mit zumindest einem Rastelement ausgebildet ist, und der Ultraschallsensor (2) verrastend an dem Halteteil (7) befestigbar ist, wobei das Halteteil (7) einen Aufnahmeschacht (10) aufweist, in dem der Ultraschallsensor (2) verrastet ist, wobei der Entkopplungsring (13) zwischen dem Halteteil (7) und dem Ultraschallsensor (2) angeordnet ist, und der Entkopplungsring (13) aus einem weichelastischen Material ausgebildet ist, **dadurch gekennzeichnet, dass** die Ultraschallsensorvorrichtung (1) weiterhin einen Dämpfungsring (12) aufweist, dass das Halteteil (7) auf der dem Aufnahmeschacht (10) abgewandten Vorderseite einen Aufnahmebereich (11) für den Dämpfungsring (12) zur Schwingungsdämpfung aufweist, dass der Dämpfungsring (12) in dem Halteteil (7) integriert ist, wobei der Entkopplungsring (13) benachbart zum Dämpfungsring (12) angeordnet ist, und der Entkopplungsring (13) zwischen dem Ultraschallsensor (2) und dem Dämpfungsring (12) dazwischenliegend positioniert ist.

2. Ultraschallsensorvorrichtung (1) nach Anspruch 1,
**dadurch gekennzeichnet, dass**
das Halteteil (7) einstückig aus Kunststoff ausgebildet ist.

3. Ultraschallsensorvorrichtung (1) nach Anspruch 2, **dadurch gekennzeichnet, dass** der Dämpfungsring (12) von dem Kunststoffmaterial des Halteteils (7) umspritzt ist.

4. Ultraschallsensorvorrichtung (1) nach Anspruch 2 oder 3,
**dadurch gekennzeichnet, dass**
das einstückige Halteteil (7) ein an den Aufnahmeschacht (10) anschließendes flachzylinderförmiges Aufnahmeteil (11) aufweist, welches einen größeren Außendurchmesser aufweist, als der Aufnahmeschacht (10).

5. Ultraschallsensorvorrichtung (1) nach einem der vorhergehenden Ansprüche,
**dadurch gekennzeichnet, dass**
der Dämpfungsring (12) aus Keramik ausgebildet ist.

6. Ultraschallsensorvorrichtung (1) nach Anspruch 5,
**dadurch gekennzeichnet, dass**
das Halteteil (7) mit einem Befestigungsring (14), welcher zur Befestigung der Ultraschallvorrichtung (1) an einem Verkleidungsteil (18) des Fahrzeugs ausgebildet ist, verrastbar ist.

7. Ultraschallsensorvorrichtung (1) nach einem der vorhergehenden Ansprüche,
**dadurch gekennzeichnet, dass**
in Abstrahlrichtung der Ultraschallsignale des Ultraschallsensors (2) ein Senderichtelement (21) zur gezielten Einstellung der Senderichtcharakteristik des Ultraschallsensors (2) angeordnet ist, insbesondere im Halteteil (7) integriert ist.

8. Anordnung (17) mit einer Ultraschallsensorvorrichtung (1) nach einem der vorhergehenden Ansprüche, und einem Verkleidungsteil, insbesondere einem Stoßfänger (18), an dessen Innenseite (19) die Ultraschallsensorvorrichtung (1) verdeckt verbaut befestigt ist.

9. Anordnung (17) nach Anspruch 8,
**dadurch gekennzeichnet, dass**
ein Befestigungsring (14) integral im Verkleidungsteil (18) ausgebildet oder an der Innenseite (19) befestigt ist.

## Claims

1. Ultrasonic sensor device (1) for a vehicle, including an ultrasonic sensor (2), a retaining part (7) and a decoupling ring (13), wherein the retaining part (7) is formed with at least one locking element, and the ultrasonic sensor (2) is fixable to the retaining part (7) in locking manner, wherein the retaining part (7) comprises a receiving duct (10), in which the ultrasonic sensor (2) is locked, wherein the decoupling ring (13) is arranged between the retaining part (7) and the ultrasonic sensor (2), and the decoupling ring (13) is formed of a softly elastic material, **characterized in that** the ultrasonic sensor device (1) further comprises a damping ring (12), that the retaining part (7) comprises a receiving area (11) for the damping ring (12) for vibration damping on the front side facing away from the receiving duct (10), that the damping ring (12) is integrated in the retaining part (7), wherein the decoupling ring (13) is arranged adjacent to the damping ring (12), and the decoupling ring (13) is positioned intermediately between the ultrasonic sensor (2) and the damping ring (12).

2. Ultrasonic sensor device (1) according to claim 1,
**characterized in that**
the retaining part (7) is integrally formed of plastic.

3. Ultrasonic sensor device (1) according to claim 2, **characterized in that** the damping ring (12) is overmolded by the plastic material of the retaining part (7).

4. Ultrasonic sensor device (1) according to claim 2 or 3,
**characterized in that**
the integral retaining part (7) comprises a flat cylindrical receiving part (11) adjoining to the receiving duct (10), which has a larger outer diameter than the receiving duct (10).

5. Ultrasonic sensor device (1) according to any one of the preceding claims,
**characterized in that**
the damping ring (12) is formed of ceramic.

6. Ultrasonic sensor device (1) according to claim 5,
**characterized in that**
the retaining part (7) is lockable by a fixing ring (14), which is formed for fixing the ultrasonic device (1) to a trim part (18) of the vehicle.

7. Ultrasonic sensor device (1) according to any one of the preceding claims,
**characterized in that**
a transmitting directional element (21) for specific adjustment of the transmitting directional characteristic of the ultrasonic sensor (2) is arranged in emission direction of the ultrasonic signals of the ultrasonic sensor (2), in particular is integrated in the retaining part (7).

8. Assembly (17) with an ultrasonic sensor device (1) according to any one of the preceding claims, and a trim part, in particular a bumper (18), to the inner side (19) of which the ultrasonic sensor device (1) is fixed in hidden installed manner.

9. Assembly (17) according to claim 8,
**characterized in that**
a fixing ring (14) is integrally formed in the trim part (18) or is fixed to the inner side (19).

## Revendications

1. Appareil de détection à ultrasons (1) pour un véhicule, avec un capteur à ultrasons (2), une partie formant retenue (7) et un anneau de découplage (13), la partie formant retenue (7) étant constituée avec au moins un élément d'encliquetage et le capteur à ultrasons (2) pouvant être fixé par encliquetage sur la partie formant retenue (7), la partie formant retenue (7) présentant un puits de réception (10), dans lequel est encliqueté le capteur à ultrasons (2), l'anneau de découplage (13) étant agencé entre la partie formant retenue (7) et le capteur à ultrasons (2) et l'anneau de découplage (13) étant constitué dans un matériau souple et élastique,
**caractérisé en ce que**
l'appareil de détection à ultrasons (1) présente en outre une bague d'amortissement (12), que la partie formant retenue (7) présente, sur la face avant, éloignée du puits de réception (10), une zone de réception (11) pour la bague d'amortissement (12), pour l'amortissement des vibrations, que la bague d'amortissement (12) est intégrée dans la partie formant retenue (7), l'anneau de découplage (13) étant agencé adjacent à la bague d'amortissement (12) et l'anneau de découplage (13) étant positionné interposé entre le capteur à ultrasons (2) et la bague d'amortissement (12).

2. Appareil de détection à ultrasons (1) selon la revendication 1,
**caractérisé en ce que**
la partie formant retenue (7) est constituée d'un seul tenant en plastique.

3. Appareil de détection à ultrasons (1) selon la revendication 2,
**caractérisé en ce que**
la bague d'amortissement (12) est surmoulée par le matériau plastique de la partie formant retenue (7).

4. Appareil de détection à ultrasons (1) selon la revendication 2 ou 3,
**caractérisé en ce que**
la partie formant retenue d'un seul tenant (7) présente une partie réception (11) en forme de cylindre plat, se raccordant au puits de réception (10), laquelle présente un diamètre extérieur supérieur à celui du puits de réception (10).

5. Appareil de détection à ultrasons (1) selon l'une des revendications précédentes,
**caractérisé en ce que**
la bague d'amortissement (12) est constituée en céramique.

6. Appareil de détection à ultrasons (1) selon la revendication 5,
**caractérisé en ce que**
la partie formant retenue (7) peut être encliquetée avec une bague de fixation (14), laquelle est constituée pour fixer l'appareil à ultrasons (1) sur une partie formant habillage (18) du véhicule.

7. Appareil de détection à ultrasons (1) selon l'une des revendications précédentes,
**caractérisé en ce**
**qu'**un élément, indiquant le sens de l'émission (21), est agencé dans le sens du rayonnement des signaux ultrasonores du capteur à ultrasons (2), pour un réglage ciblé de la caractéristique du sens de rayonnement du capteur à ultrasons (2), en particulier qu'il est intégré dans la partie formant retenue (7).

8. Agencement (17) avec un appareil de détection à ultrasons (1) selon l'une des revendications précédentes et une partie formant habillage, en particulier un dispositif d'amortissement de chocs (18), sur la face intérieure (19) duquel est fixé, monté dissimulé, l'appareil de détection à ultrasons (1).

9. Agencement (17) selon la revendication 8,
**caractérisé en ce**
**qu'**une bague de fixation (14) est constituée intégralement dans la partie formant habillage (18) ou et fixée sur la face interne (19).
